# EUROPÄISCHE PATENTSCHRIFT

(11) **EP 0 794 876 B1**
(45) Veröffentlichungstag und Bekanntmachung des Hinweises auf die Patenterteilung: **21.07.1999**
(21) Anmeldenummer: 96933256.8
(22) Anmeldetag: 10.10.1996
(51) Int. Cl.: B60K 15/04

(54) **ENDSTÜCK FÜR EINEN FAHRZEUGTANK-EINFÜLLSTUTZEN**
END-PIECE FOR A VEHICLE TANK FILLER PIPE
PIECE TERMINALE DESTINEE A UNE TUBULURE DE REMPLISSAGE DE RESERVOIR DE VEHICULE

(30) Priorität: 10.10.1995 AT 54795 U
(43) Veröffentlichungstag der Anmeldung: 17.09.1997
(73) Patentinhaber: Tesma Motoren- und Getriebetechnik Ges.m.b.H., 8160 Preding-Krottendorf (AT)
(72) Erfinder: PALVÖLGYI, Sandor, A-8200 Gleisdorf (AT)
(74) Vertreter: Weiser, Andreas, Dip.-Ing.
(86) Internationale Anmeldenummer: AT9600193
(87) Internationale Veröffentlichungsnummer: WO9713649

(56) Entgegenhaltungen:
- EP-A- 0 658 484
- DE-C- 4 305 394

## Beschreibung

Die vorliegende Erfindung betrifft ein Endstück für einen Fahrzeugtank-Einfüllstutzen, mit einem topfförmigen Einsatz, der in das obere Ende des Einfüllstutzens dicht einsetzbar ist und an seinem unteren Ende mit einer Öffnung für den Durchtritt des Füllrohres einer Zapfpistole versehen ist, wobei der die Öffnung innenseitig umgebende Rand des Einsatzes eine ringformige Dichtfläche für den axialen Angriff einer Dichtlippe eines in den Einsatz eingreifenden Tankdeckels bildet.

Bei derartigen, für axial abdichtende Tankverschlüsse bestimmten Endstücken besteht die Gefahr, daß das Füllrohr beim Einführen in den Einsatz die Dichtfläche berührt und deren Oberfläche beschädigt, so daß im Laufe der Zeit die Dichtwirkung abnimmt.

Die Erfindung setzt sich zum Ziel, ein Endstück der genannten Art zu schaffen, bei dem eine Beeinträchtigung der Dichtwirkung auch bei oftmaligem Gebrauch weitgehend ausgeschlossen ist. Dieses Ziel wird mit einem Endstück der einleitend genannten Art erreicht, das sich gemäß der Erfindung dadurch auszeichnet, daß der Rand radial innerhalb der Dichtfläche einen dem oberen Ende des Einsatzes zugewandten, im wesentlichen ringförmigen Vorsprung aufweist. Der Vorsprung schützt die Dichtfläche vor einer unbeabsichtigten Berührung durch das Füllrohr, so daß eine Beschädigung der Dichtfläche weitgehend ausgeschlossen ist und die Dichtwirkung über die gesamte Verwendungszeit erhalten bleibt.

Eine fertigungstechnisch besonders kostengünstige Ausführung der Erfindung besteht darin, daß der Vorsprung ein aus der Wandung des Einsatzes geformter Ringwulst ist.

In weiterer Ausgestaltung der Erfindung wird bevorzugt vorgesehen, daß der Rand radial innerhalb des Vorsprunges gleitend in einen nach unten gewandten, zylinderförmigen Führungsabschnitt übergeht. Dies unterstützt ein leichtes Einführen des Füllrohres.

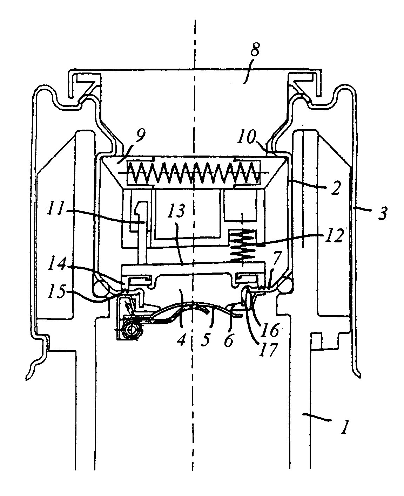

Die Erfindung wird nachstehend an Hand eines in der Zeichnung dargestellten Ausführungsbeispieles näher erläutert.

Die Figur zeigt das erfindungsgemäße Endstück schematisch im Längsschnitt.

In der Figur ist das obere Ende eines Einfüllstutzens 1 gezeigt, dessen (nicht dargestelltes) unteres Ende zu einem Fahrzeug-Kraftstofftank führt. In den Einfüllstutzen 1 ist ein topfförmiger Einsatz 2 abdichtend eingesetzt, der mit einer Außenschürze 3 versehen ist, welche den Einfüllstutzen 1 auch außenseitig übergreift. Der Einsatz 2 ist an seinem unteren Ende mit einer Öffnung 4 für den Durchtritt des (nicht dargestellten) Füllrohres einer (ebenfalls nicht dargestellten) Zapfpistole versehen. Die Öffnung 4 ist durch eine federbelastete Klappe 5 verschlossen, die in der Ruhestellung an einer Ringdichtung 6 anliegt, welche an der Unterseite des die Öffnung 4 umgebenden Randes 7 des Einsatzes 2 angeordnet ist.

Der Einsatz 2 nimmt einen (nur schematisch dargestellten) Tankdeckel 8 auf, der an seinem Außenumfang zumindest zwei federbelastete Sperrklinken 9 aufweist, welche hinter einem Innenabsatz 10 des Einsatzes 2 einrasten und mit Hilfe eines im oberen Teil des Tankdeckels 8 angeordneten (nicht näher dargestellten) Schlüsselmechanismus zur Entriegelung radial nach innen gezogen werden können.

An seinem unteren Ende weist der Tankdeckel 8 eine von Führungsstiften 11 in axialer Richtung geführte und durch Druckfedern 12 beaufschlagte Druckplatte 13 auf, die eine ringförmige Dichtlippe 14 trägt und axial gegen eine ringförmige Dichtfläche 15 des Einsatzes 2 preßt, welche auf dem Rand 7 vorgesehen ist.

Um die Dichtfläche 15 vor einer unbeabsichtigten Berührung durch das Füllrohr der Zapfpistole beim Betanken zu schützen, weist der Rand 7 radial innerhalb der Dichtfläche 15 einen dem oberen Ende des Einsatzes 2 zugewandten ringförmigen Vorsprung 16 auf. Bei dem dargestellten Beispiel ist der Vorsprung 16 ein aus der Wandung des Einsatzes 2 geformter Ringwulst, doch wäre auch ein gesonderter, am Einsatz 2 befestigter Vorsprung mit beliebiger Form vorstellbar. Die Höhe des Vorsprunges 16 bezüglich der Dichtfläche 15 wird unter Berücksichtigung des Durchmessers der Öffnung 4, des Durchmessers des Füllrohres und des maximalen Verkantungswinkels des Füllrohres beim Eintritt gewählt.

Im Anschluß an den Vorsprung 16 geht der Rand 7 gleitend in einen nach unten gewandten, zylinderförmigen Führungsabschnitt 17 über, welcher die Führung des Füllrohres nach dem Passieren des Vorsprunges 16 übernimmt.

## Patentansprüche

1. Endstück für einen Fahrzeugtank-Einfüllstutzen (1), mit einem topfförmigen Einsatz (2), der in das obere Ende des Einfüllstutzens (1) dicht einsetzbar ist und an seinem unteren Ende mit einer Öffnung (4) für den Durchtritt des Füllrohes einer Zapfpistole versehen ist, wobei der die Öffnung (4) innenseitig umgebende Rand (7) des Einsatzes (2) eine ringförmige Dichtfläche (15)für den axialen Angriff einer Dichtlippe (14) eines in den Einsatz (2) eingreifenden Tankdeckels (8), bildet, dadurch gekennzeichnet, daß der Rand (7) radial innerhalb der Dichtfläche (15) einen dem oberen Ende des Einsatzes (2) zugewandten, im wesentlichen ringförmigen Vorsprung (16) aufweist.

2. Endstück nach Anspruch 1, dadurch gekennzeichnet, daß der Vorsprung (16) ein aus der Wandung des Einsatzes (2) geformter Ringwulst ist.

3. Endstück nach Anspruch 1 oder 2, daß der Rand (7) radial innerhalb des Vorsprunges (16) gleitend in einen nach unten gewandten, zylinderförmigen Führungsabschnitt (17) übergeht.

## Claims

1. End piece for a vehicle tank filler neck (1), comprising a pot-shaped insert (2) which can be fitted snugly into the upper end of the filler neck (1) and is provided at its lower end with an opening (4) for the passage of the filling hose of a fuel pump nozzle, the edge (7) of the insert (2) surrounding the opening (4) on the inside forming an annular sealing surface (15) for the axial engagement of a sealing lip (14) of a tank cover (8) engaging in the insert (2), characterised in that the edge (7) is provided radially within the sealing surface (15) with a substantially annular projection (16) directed towards the upper end of the insert (2).

2. End piece according to claim 1, characterised in that the projection (16) is a torus formed from the wall of the insert (2).

3. End piece according to claim 1 or claim 2, characterised in that the edge (7) merges slidably into a downwardly directed cylindrical guide portion (17) radially within the projection (16).

## Revendications

1. Pièce terminale destinée à une tubulure de remplissage (1) de réservoir de véhicule, comportant une partie intégrée (2) en forme de marmite pouvant être insérée hermétiquement dans l'extrémité supérieure de la tubulure de remplissage (1) et pourvue, à son extrémité inférieure, d'un orifice (4) affecté au passage du tube de déversement d'un pistolet distributeur, le bord (7) de la partie intégrée (2), qui entoure intérieurement l'orifice (4), formant une surface annulaire d'étanchement (15) pour la venue en prise axiale d'une lèvre d'étanchement (14) d'un couvercle (8) de réservoir pénétrant dans la partie intégrée (2), caractérisée par le fait que le bord (7) présente, à l'intérieur de la surface d'étanchement (15) dans le sens radial, une protubérance (16) pour l'essentiel annulaire qui est tournée vers l'extrémité supérieure de la partie intégrée (2).

2. Pièce terminale selon la revendication 1, caractérisée par le fait que la protubérance (16) est un bourrelet annulaire formé à partir de la paroi de la partie intégrée (2).

3. Pièce terminale selon la revendication 1 ou 2, caractérisée par le fait que le bord (7) fusionne en douceur, à l'intérieur de la protubérance (16) dans le sens radial, dans un segment cylindrique de guidage (17) tourné vers le bas.
